# EUROPEAN PATENT APPLICATION

(11) **EP 4 825 632 A1**
(43) Date of publication of application: **21.10.2026**
(21) Application number: 26171274.9
(22) Date of filing: 08.04.2026
(51) Int. Cl.: B60K 35/28, B60W 30/095, B60W 50/14, B60R 1/23

(54) **CAMERA MONITOR SYSTEM INCLUDING JACKKNIFE WARNING FEATURES**

(30) Priority: 15.04.2025 US 202519179292
(71) Applicant: Stoneridge Electronics AB, 16903 Solna (SE)
(72) Inventor: HE, Yu, Dearborn Heights, 48127 (US); MA, Liang, Rochester, 48306 (US); SHARMA, Utkarsh, Farmington Hills, 48334 (US)
(74) Representative: Marks & Clerk LLP

(57) **Abstract**

A CMS for a vehicle includes a camera that is mounted to a tractor and records images that depict a trailer having a wheelbase. An electronic display displays the images. A CMS controller is operatively connected to the camera and electronic display. The CMS controller performs image processing on the images to extract at least the wheelbase. The CMS controller determines whether a trailer angle of the trailer exceeds a jackknife warning threshold based on a depiction of the trailer in the images. A distance to a jackknife event is depicted on the display if the jackknife warning threshold is exceeded.

## Description

### TECHNICAL FIELD

This disclosure relates to a camera monitor system (CMS) for a vehicle, and specifically to CMS that includes jackknife warning features.

### BACKGROUND

Mirror replacement systems, and camera systems for supplementing mirror views, are utilized in commercial vehicles to enhance the ability of a vehicle operator to see a surrounding environment. Camera monitor systems (CMS) utilize one or more cameras to provide an enhanced field of view to a vehicle operator. In some examples, the camera systems cover a larger field of view than a conventional mirror, or include views that are not fully obtainable via a conventional mirror.

In addition to mirror replacement, the images provided via the cameras in a CMS can be utilized to detect aspects of the environment and aspects of the vehicle in an image-processing-based detection process. Among the aspects of the vehicle that can be detected are trailer properties and trailer positioning relative to the vehicle. During some maneuvers, such as backup or turning, the position of the trailer can impact the maneuver, and corrective action may be desired in order to prevent jackknifing and/or similar positioning problems. Knowledge of the current trailer angle is particularly helpful in operating such systems.

Prior jackknife warning systems alert the operator to an impending jackknife situation. Because some vehicle maneuvers in tight spaces may require the trailer to become very close to an actual jackknife, prior art alerts may be too ambiguous or open to interpretation as to how imminent the jackknife may be. Thus, the alert may not be very effective as it is ignored by the operator.

### SUMMARY

According to an example embodiment, a camera monitor system (CMS) for a vehicle includes a camera that is mounted to a tractor and configured to record images that depict a trailer having a wheelbase, the trailer is attached to the tractor, an electronic display that is configured to display the images, and a CMS controller that is operatively connected to the camera and electronic display. The CMS controller is configured to perform image processing on the images to extract at least the wheelbase. The CMS controller is configured to determine whether a trailer angle of the trailer exceeds a jackknife warning threshold based on a depiction of the trailer in the images, and depict a distance to a jackknife event if the jackknife warning threshold is exceeded.

**In** a further embodiment of any of the foregoing, the CMS controller may be configured to determine that the trailer angle of the trailer exceeds the jackknife warning threshold based on a calculated trailer angle based upon a steering angle, a tractor length from rotational axes of front and rear tractor wheels, the wheelbase, a trailer axle to trailer end distance, and a distance of rear tractor wheel to hitch point.

**In** a further embodiment of any of the foregoing, the CMS controller may be configured to determine that the trailer angle is based upon the vehicle velocity.

**In** a further embodiment of any of the foregoing, the CMS controller may be configured to calculate a trailer angular velocity to determine the distance to the jackknife event.

**In** a further embodiment of any of the foregoing, the images may depict at least one of a Class II view and a Class IV view. The depicted distances may be overlayed onto the at least one of a Class II view and a Class IV view.

**In** a further embodiment of any of the foregoing, the distance to the jackknife event may be a distance of vehicle travel along a current vehicle trajectory.

**In** a further embodiment of any of the foregoing, the warning may include an indication of a severity of a risk of a jackknife condition occurring. The indication may include at least one of a change in color of the depicted distance, a flashing of the depicted distance, and an audible warning.

**In** a further embodiment of any of the foregoing, the jackknife warning threshold may be time-based.

**In** a further embodiment of any of the foregoing, the jackknife warning threshold may correspond to a particular trailer angle.

According to another example embodiment, a method for providing an alert for an impending jackknife between a vehicle and a trailer includes using a camera that is mounted to a tractor to record images that depict a trailer having a wheelbase, the trailer is attached to the tractor, extracting the wheelbase from the images by image processing, displaying the images on an electronic display, determining whether a trailer angle of the trailer exceeds a jackknife warning threshold based on a depiction of the trailer in the images, and depict a distance to a jackknife event if the jackknife warning threshold is exceeded.

**In** a further embodiment of any of the foregoing, the determining step may include determining whether the trailer angle of the trailer exceeds the jackknife warning threshold based on a calculated trailer angle based upon a steering angle, a tractor length from rotational axes of front and rear tractor wheels, the wheelbase, a trailer axle to trailer end distance, and a distance of rear tractor wheel to hitch point.

**In** a further embodiment of any of the foregoing, the determining step may include determining whether the trailer angle is based upon the vehicle velocity.

**In** a further embodiment of any of the foregoing, the determining step may include calculating a trailer angular velocity to determine the distance to the jackknife event.

**In** a further embodiment of any of the foregoing, the images may depict at least one of a Class II view and a Class IV view. The depicted distances may be overlayed onto the at least one of a Class II view and a Class IV view.

**In** a further embodiment of any of the foregoing, the distance to the jackknife event may be a distance of vehicle travel along a current vehicle trajectory.

**In** a further embodiment of any of the foregoing, the warning may include an indication of a severity of a risk of a jackknife condition occurring. The indication may include at least one of a change in color of the depicted distance, a flashing of the depicted distance, and an audible warning.

**In** a further embodiment of any of the foregoing, the jackknife warning threshold may be time-based.

**In** a further embodiment of any of the foregoing, the jackknife warning threshold may correspond to a particular trailer angle.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

These and other features of the present invention can be best understood from the following specification and drawings, the following of which is a brief description.

### BRIEF DESCRIPTION OF THE DRAWINGS

The disclosure can be further understood by reference to the following detailed description when considered in connection with the accompanying drawings wherein:
Figure 1 is a prior art schematic front view of a commercial truck with a camera mirror system (CMS) used to provide at least narrow and wide fields of view alongside the vehicle (e.g., Class II and Class IV views).
Figure 2 is a prior art schematic birds-eye view of the commercial truck of Figure 1 with a CMS providing, for example, Class II, Class IV, Class V, Class VI, and Class VIII views.
Figure 3 is a prior art schematic top view of an example vehicle cabin interior.
Figure 4 is flowchart depicting a disclosed method of providing a jackknife warning.
Figures 5 and 6 are schematic kinematic relationships used by the disclosed CMS in the performing the example method shown in Figure 4.
Figures 7A and 7B illustrate Class II (narrow) and Class IV (wide) example views generated by the disclosed CMS at a trailer angle of approximately 45 degrees.
Figures 8A and 8B illustrates Class II (narrow) and Class IV (wide) example views generated by the disclosed CMS at a trailer angle of approximately 75 degrees.
Figures 9A and 9B illustrate Class II (narrow) and Class IV (wide) example views generated by the disclosed CMS at a trailer angle of approximately 90 degrees.

### DETAILED DESCRIPTION

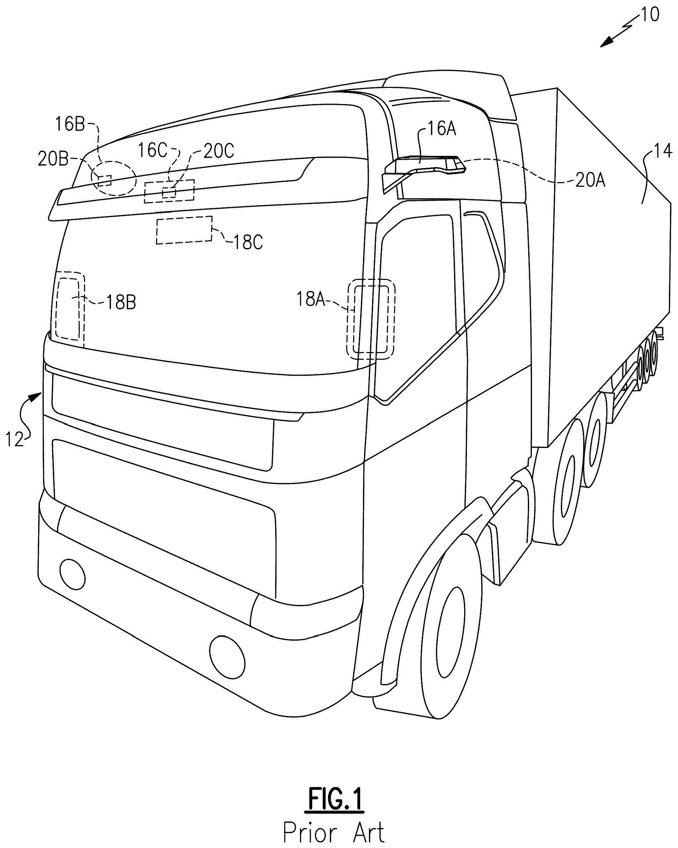

Schematic views of a commercial vehicle 10 are illustrated in Figures 1-3. The commercial vehicle 10 includes a vehicle cab or "tractor" 12 for pulling a trailer 14, where the trailer 14 articulates with respect to the tractor 12 during turns. Although the commercial vehicle 10 is depicted as a commercial truck with a single trailer in this disclosure, it is understood that other commercial vehicle configurations may be used (e.g., different types or quantities of trailers).

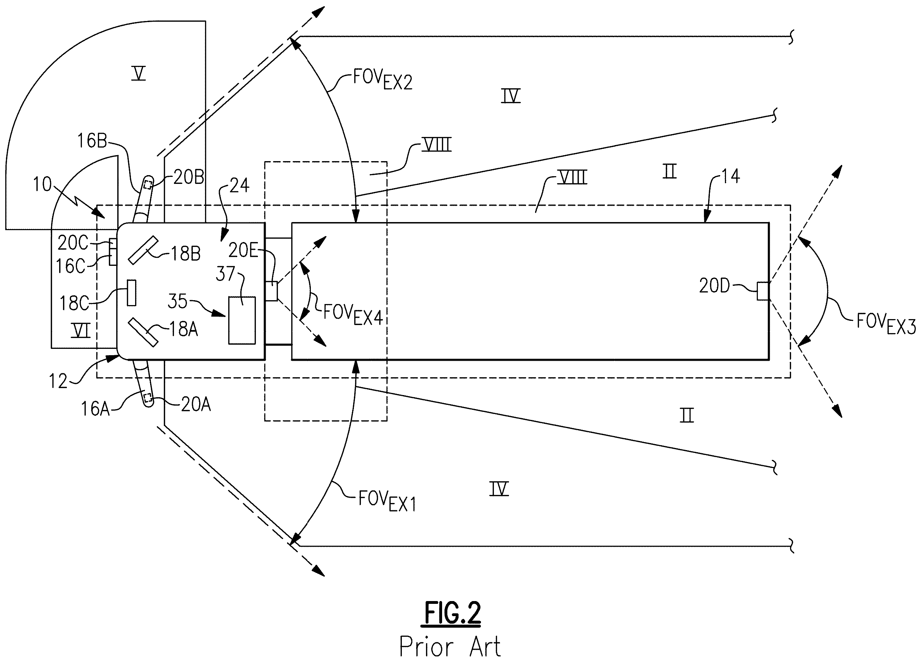

A pair of camera arms 16A-B include a respective base that is secured to, for example, the tractor 12. A pivoting arm is supported by the base and may articulate relative thereto. At least one rearward facing camera 20A-B is arranged respectively on or within the camera arms 16A-B. The exterior cameras 20A-B respectively provide an exterior field of view FOVEX1, FOVEX2 that each include at least one of Class II and Class IV views (Fig. 2), which are legally prescribed views in the commercial trucking industry.

The Class II view on a given side of the commercial vehicle 10 is a subset of the class IV view of the same side of the commercial vehicle 10. Multiple cameras also may be used in each camera arm 16A-B to provide these views, if desired. Class II (narrow) and Class IV (wide angle) views are defined in European R46 legislation, for example, and the United States and other countries may have similar driver visibility requirements for commercial trucks. Any reference to a "Class" view is not intended to be limiting, but is intended as an example of the type of view provided to a display from a particular camera. For example, certain views may be prescribed in SAE J3155 or other regulations.

Each camera arm 16A-16B may also provide a housing that encloses electronics, e.g., a controller, that are configured to provide various features of the CMS 15. The camera arms 16A-B may be mounted either at a roof-mount location over the cab door (as shown), or on a door-mounted bracket or station, for example. If desired, the camera arms 16A-B may include conventional mirrors integrated with them as well, although the CMS 15 may be used to entirely replace mirrors. In additional examples, each side can include multiple camera arms, with each arm housing one or more cameras and/or mirrors.

If video of Class V and/or Class VI views is also desired, a camera housing 16C and camera 20C may be arranged at or near the front of the commercial vehicle 10 to provide those views (Fig. 2). Generally, Class V covers a passenger side of the vehicle from a passenger vehicle cab corner aftward along a cab of the vehicle, and Class VI covers a passenger side of the vehicle from a passenger vehicle cab corner along a front of a cab of the vehicle.

A backup camera 20D may be provided which provides a field of view FOVEX3. The backup camera 20D may be mounted at a top/centerline of the trailer, at a bumper/bed level of the trailer, or at a top-corner of the back of the trailer, for example. Alternatively, or in addition to the rear trailer camera, a "fifth wheel camera" 20E may be provided that is mounted to a rear of the tractor 12 and that provides a field of view FOVEX4. The fifth wheel camera 20E may be mounted anywhere between the lateral plane of the fifth wheel fixture and the top/roof edge of the tractor, for example.

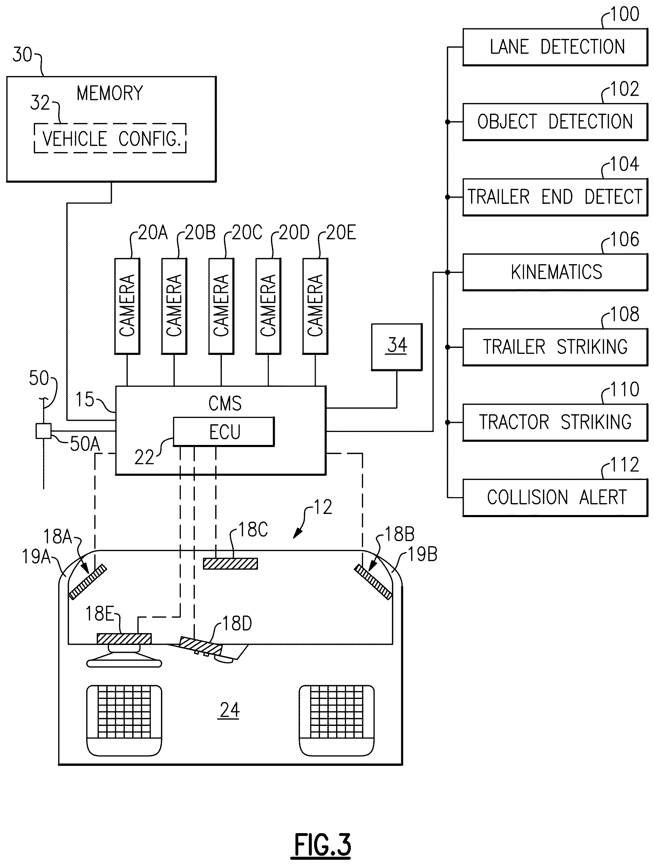

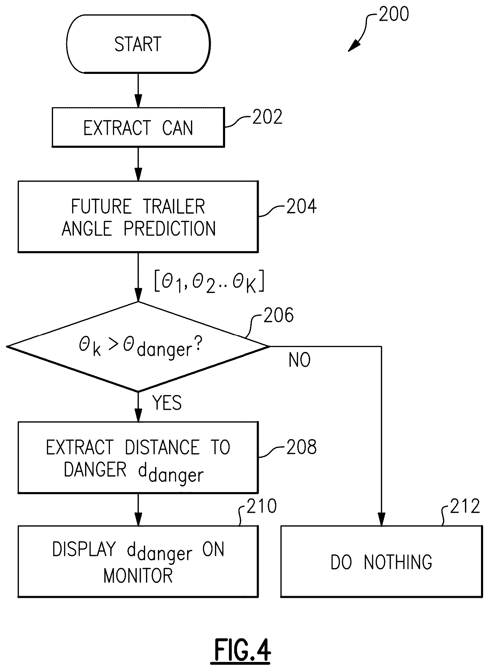

Figure 3 is a schematic top view of an example vehicle cabin interior 24, and Figure 4 is a perspective view of the vehicle cabin interior 24. Referring now to Figures 3-4 with continued reference to Figures 1-2, electronic displays 18A-E (e.g., which may be video displays, such as LCD displays) and cameras 20A-E (generally, "camera 20") are shown. The various electronic displays 18A-E and cameras 20A-E are part of a camera monitor system (CMS) 15, and therefore act as CMS displays and CMS cameras. As used herein, a "CMS camera" 20 is a camera configured to record images of an environment surrounding a commercial vehicle 10, and a "CMS display" 18 is an electronic display (e.g., an LCD) that is configured to image or display feeds from those cameras.

The CMS 15 includes a CMS controller or electronic control unit (ECU) 22 includes processing circuitry that supports operation of the CMS 15. The CMS ECU 22 is operatively connected to memory (which may include any one or combination of volatile memory elements (e.g., random access memory (RAM, such as DRAM, SRAM, SDRAM, VRAM, etc.)) and/or nonvolatile memory elements (e.g., ROM, hard drive, tape, CD-ROM, etc.). The processing circuitry may include one or more microprocessors, microcontrollers, application specific integrated circuits (ASICs), or the like. The ECU 22 is connected to the vehicle's CAN bus 50 via a connector 50A.

The CMS displays 18A-B are arranged on each of the driver and passenger sides within the vehicle cab 12 on or near the A-pillars 19A-B to display Class II and Class IV views on its respective side of the commercial vehicle 10, which provide rear facing side views along the commercial vehicle 10 that are captured by the exterior cameras 20A-B. In a left-hand drive vehicle, the left A-pillar 19A is the operator side and the right-hand A-pillar 19B is the passenger side. For a right-hand drive vehicle, the operator and passenger sides are the opposite.

As discussed above, if video of Class V and Class VI views are also desired, the camera housing 16C and camera 20C may be arranged at or near the front of the commercial vehicle 10 to provide those views (Fig. 2). In the example of Figure 3, additional displays 18C-E are provided. Display 18C is arranged in the vehicle cabin interior 24 near the top center of the windshield may be used to display the Class V and Class VI views, which are toward the front of the commercial vehicle 10, or a backup camera view (from camera 20D or 20E) to the driver. Display 18D is provided in a center console area of the vehicle cabin interior 24, generally located centrally in a bottom half of the vehicle cabin, and may be used for other purposes, such as navigation, infotainment, etc (i.e., a secondary information display (SID)). Additional or different displays may be used to display images from the cameras 20A-E or other cameras.

Display 18E may be part of an instrument cluster (i.e., a primary or driver information display (DIS)) mounted in an instrument panel located behind the steering wheel, for example. The DIS 18E is configured to the depict vehicle operating information, such as at least one of a vehicle speed and an engine rotational speed. Other example vehicle operating information such, as odometer, trip odometer, fuel economy, vehicle and/or engine maintenance information, vehicle telltales (e.g., warning lights, malfunction lights, status lights (e.g., turn signals), etc. for tractor and/or trailer).

If video of Class VIII views is desired, camera housings can be disposed at the sides and rear of the commercial vehicle 10 to provide fields of view including some or all of the Class VIII zones of the commercial vehicle 10. In such examples, one of the displays 18C-E may include one or more frames displaying the Class VIII views. The displays 18A, 18B, 18C face a driver region 35 within the vehicle cabin interior 24 where an operator is seated on a driver seat 37.

In various examples, the ECU 22 includes one or modules having algorithm(s), equation(s) and/or decision manager(s) that receive input(s) from sensors (e.g., cameras 20A-20E, ultrasonic, LiDar, radar, etc.) and/or stored values, as schematically illustrated in Figure 3. Example modules include Lane Detection Module 100, Object Detection Module 102, Trailer End Detection Module 104, Kinematic Module 106, Trailer Striking Area Prediction Module 108, Tractor Striking Area Prediction Module 110, and Collision Alert Module 112. Example inputs include one or more sensors 34, such as a steering angle sensor, a vehicle speed sensor, gear position sensor, and/or other sensor data. Vehicle configuration information 32, which may be stored in memory 30, relates to vehicle characteristics (e.g., trailer length, axle position, trailer type/wheelbase, tractor configuration/wheelbase, hitch point location etc.), provided by the manufacturer, operator, and/or determined by one or more of the modules. During vehicle operation, the ECU 22 may communicate information to the driver, fleet operator, or others using an output (e.g, displays 18, speaker, etc.). Example operation and uses of these modules are disclosed in International Application No. PCT/US2023/083416 filed on December 11, 2023, entitled "CAMERA MONITOR SYSTEM WITH TRAILER CURB STRIKE ALERT AND TRAILER STRIKING AREA," which is incorporated herein by reference in its entirety.

Because a tractor can tow different trailers at different times, the trailer wheelbase value is difficult to determine beforehand (e.g., as a saved vehicle characteristic). Thus, the wheelbase of the trailer (i.e., hitch point to trailer axle distance) may be determined by image processing using images from the cameras 20A, 20B to identify, for example, the wheels on the rear axle(s) of the trailer. Examples of wheel base determination techniques, which are incorporated herein by reference in their entirety are: USPN 12,269,544, entitled "IMAGE BASED TRAILER WHEELBASE DETERMINATION", filed on June 15, 2021; USPN 12,115,917, entitled "CAMERA MONITOR SYSTEM FOR COMMERCIAL VEHICLES INCLUDING WHEEL POSITION ESTIMATION", filed on December 13, 2022; US Pub. No. 2024/087,159, entitled "CAMERA MONITOR SYSTEM FOR COMMERCIAL VEHICLES INCLUDING WHEEL POSITION ESTIMATION", filed on September 11, 2023; US App. Ser. No. 18/731,827, entitled "COMMERCIAL VEHICLE CAMERA MONITOR SYSTEM WITH TRAILER WHEEL BASE ESTIMATION, filed on August 12, 2024; and International App. Ser. No. PCT/EP2025/056,117, entitled "COMMERCIAL VEHICLE CAMERA MONITOR SYSTEM WITH STEERING RATIO AND TRAILER WHEELBASE ESTIMATION USING PARTICLE SWARM OPTIMIZATION", filed on March 25, 2025.

The lane detection module 100 also uses image processing of the captured images to identify markings on the roadway, such as lane markers that visually divide adjacent lanes. One example algorithm is described in United States Publication No. US2023/117,719, entitled "CAMERA MIRROR SYSTEM DISPLAY FOR COMMERCIAL VEHICLES INCLUDING SYSTEM FOR IDENTIFYING ROAD MARKINGS", which is incorporated by reference in its entirely. In that publication, a lane detection module is described in which an object detection algorithm identifies a lane marking in a roadway by filtering a color of the lane marking from a surrounding portion of the captured image. Other techniques based upon deep learning technology or another computer vision method may be used, if desired.

The object detection module 102 includes one or more image processing algorithms configured to identify objects in the captured images. The algorithms may be used to identify VRU's (e.g., pedestrians or cyclists), attributes of the tractor 12 and/or trailer 14, other vehicles, signs, curbs, trees, buildings and/or other inanimate objects.

The trailer end detection module 104 is another image processing module that extracts one or more trailer features from the captured images to determine the location of the end of the trailer in 3D space. These extracted attributes can be used to detect objects such as tractor wheels, trailer edges and other features. Example wheel detection algorithm techniques are disclosed in United States Publication No. US2023/202,394 entitled "CAMERA MONITOR SYSTEM FOR COMMERCIAL VEHICLES INCLUDING WHEEL POSITION ESTIMATION", which is incorporated herein by reference in its entirety. Example trailer edge detection algorithm techniques are disclosed in United States Publication No. US2023/125,045 entitled "TRAILER END TRACKING IN CAMERA MONITORING SYSTEM", which is incorporated herein by reference in its entirety. Other techniques may be used, if desired.

In one example operation, the CMS 15 utilizes the kinematics module 106 to predict a striking zone of the trailer 14 during a turn operation and generates a two-dimensional overlay to digitally impose over at least one of the displayed Class II/IV images thereby showing the vehicle operator an expected striking zone of the trailer 14 and allowing the vehicle operator adjust the vehicle operations accordingly. The kinematics model of the vehicle 10 is simplified by using two bicycle, or half-track, models. That is, all wheels need not be represented in the model. Said another way, the bicycle model, which is used as kinematics model in the Kinematic Module 104 is a simplified representation of a four wheeled vehicle. Just the inside wheels of a turning maneuver can be modeled, as that is the side of the vehicle 10 that is most at risk of a collision. It is used to predict the pose of the vehicle 10 using the instantaneous position, angles, velocities and accelerations acting on/in the system. Additionally, it is assumed in this kinematics model that all slip angles are zero. As a result, a vehicle component's (e.g., wheel location and/or trailer end) speed and future displacement can be propagated through the mathematical algorithm very quickly. Additionally, only the trailer angle, the vehicle speed and the steering angle are needed as inputs, which provides a simple, precise, quick approach to path prediction. An example of a kinematics model using a bicycle model approach is disclosed in International Patent Application No. PCT/US23/83434, entitled "KINEMATICS MODEL FOR CAMERA MONITOR SYSTEM", filed on December 11, 2023 and incorporated herein by reference in its entirety.

The CMS 15 uses the received captured images from the cameras 20A, 20B, as well as any other cameras and vehicle operation data received from a general vehicle controller through a data connection, such as a CAN or LIN bus, to estimate a predicted position of the tractor and/or trailer side at each of multiple side positions and multiple points in time. These positions are converted to a geometric area encompassing all the positions. In this way, the shape and size of the geometric area is not fixed, but rather reflects an actual predicted striking area of the trailer.

In order to avoid accidental strikes, the striking area prediction system uses the vehicle data (e.g. steering angle, steering rate, trailer angle, vehicle speed, trailer wheelbase, tractor wheelbase, hitch point location, yaw rate and the like) to generate a predicted striking zone over time. The predicted striking zone is a prediction of the path the trailer will take over the course of the turn and is re-calculated continuously as the turn progresses. The trailer striking area is also useful in a potential "curve cut" scenario when the vehicle 10 is traveling down a curved roadway. In a curvy road, it becomes more likely for the trailer end to cross the lane markers. indicating boundaries to adjacent lanes, creating a potentially dangerous situation.

The CMS 15 includes a Decision Manager or Collision Alert Module 112 that communicates with the modules 100-110 to evaluate the proximity between the predicted tractor and/or trailer paths (i.e., the tractor and trailer striking areas) and one or more objects (e.g., predicting an imminent curb strike, curve cut, object collision etc.). The decision manager considers the estimated time to the event, severity (what the object is), closing rate between objects, etc. and may provide an overlay and/or alert.

While various overlays and alerts may useful in increasing operator awareness and enhancing safety, it is desirable to more easily and proactively manage awareness of vehicle surroundings. This is true of jackknife warnings, as it is desirable to provide a warning that useful to the operator.

A method 200 of providing a jackknife warning is shown in Figure 4. Vehicle information, such as steering angle (α), vehicle speed and other parameters, are extracted from the CAN bus 50 (block 202). This and other information are used by the kinematics module 106, including such data as vehicle configuration information 32 from memory 30 related to a tractor length from rotational axes of front and rear tractor wheels (L₁), a hitch point to trailer axle distance (L₂), and a distance of rear tractor wheel to hitch point (M). Other parameters extracted from image processing by the CMS 15 may also be used, such as a trailer axle to trailer end distance (L₃).

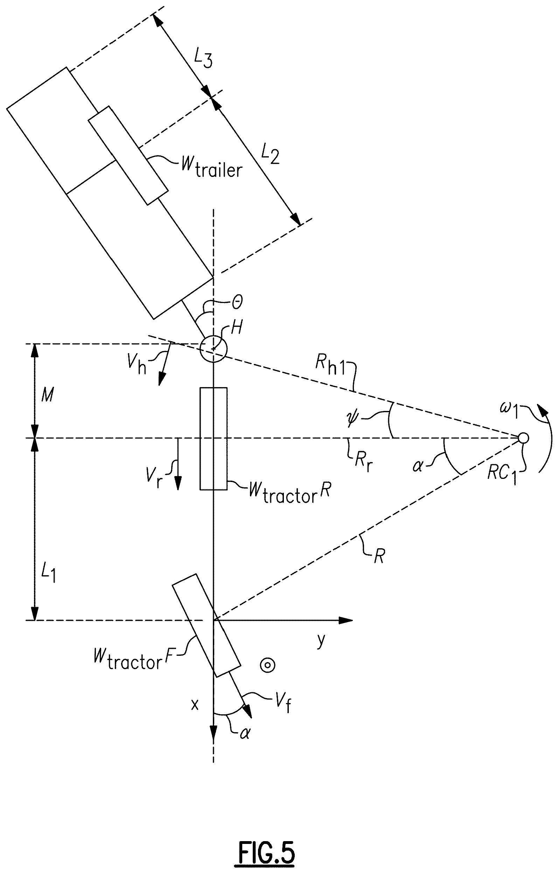

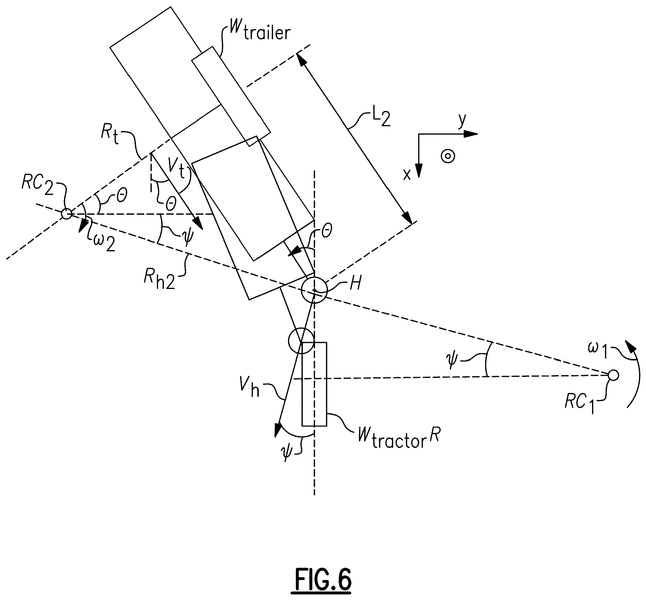

The geometric relationship between the various parameters used by the kinematics model are shown in Figures 5 and 6. The variables are described below, and the related equations are provided.

### Coordinate and Time Parameters:

x, y = Cartesian coordinates
H = hitch point
RC₁ = rotational center of tractor
RC₂ = rotational center of trailer
t₀ = start time of algorithm
t = time of prediction

### Distance Parameters:

L₁ = tractor length (from rotational axes of front and rear tractor wheels)
L₂ = hitch point to trailer axle distance (i.e., wheelbase)
L₃ = trailer axle to trailer end distance
M = distance of rear tractor wheel to hitch point
R = distance of front tractor wheel along its rotational axis to RC₁
Rᵣ = distance of rear tractor wheel along its rotational axis to RC₁
Rₜ = distance of trailer wheel along its rotational axis to RC₂
Rₕ₁ = distance of hitch point to RC₁
Rₕ₂ = distance of hitch point to RC₂

### Angular Parameters:

α = front wheel steering angle (also corresponding to other geometric relationships)
θ = trailer angle about hitch point relative to longitudinal axis of tractor (also corresponding to other geometric relationships)
ψ = angle between Rᵣ and Rₕ₁ (also corresponding to other geometric relationships)

### Velocity Parameters:

ω₁ = angular velocity of tractor about RC₁
ω₂ = angular velocity of trailer about RC₂
V_{f} = front wheel velocity (perpendicular to front tractor wheel rotational axis)
Vᵣ = rear wheel velocity (perpendicular to rear tractor wheel rotational axis)
Vₕ = hitch point velocity (perpendicular to Rₕ₁)
Vₜ = trailer end velocity
θ̇ = trailer angular velocity about hitch point H

Given the above parameters and their relationships: $Sin \left(α\right) = \frac{{L}_{1}}{R} \to R = \frac{{L}_{1}}{sin \left(α\right)}$ $tan \left(α\right) = \frac{{L}_{1}}{R} \to {R}_{r} = \frac{{L}_{1}}{tan \left(α\right)}$ $tan \left(ψ\right) = \frac{M}{{R}_{r}} \to ψ = atan \left(\frac{M}{{R}_{r}}\right)$ $sin \left(ψ\right) = \frac{M}{{R}_{h}} \to {R}_{h} = \frac{M}{sin \left(ψ\right)}$ ${ω}_{1} R = {V}_{f} \to {ω}_{1} = \frac{{V}_{f}}{R}$ ${V}_{h} = {R}_{h} {ω}_{1}$ ${V}_{r} = cos \left(α\right) ∗ {V}_{f}$

To calculate the linear speed of the trailer end: $\frac{{L}_{2}}{{R}_{t}} = tan \left(θ+ψ\right) \to {R}_{t} = \frac{{L}_{2}}{tan \left(θ+ψ\right)}$ $\frac{{L}_{2}}{{R}_{h 2}} = sin \left(θ+ψ\right) \to {R}_{h 2} = \frac{{L}_{2}}{sin \left(θ+ψ\right)}$ ${R}_{h 2} {ω}_{2} = {V}_{h} \to {ω}_{2} = \frac{{V}_{h}}{{R}_{h 2}} \left(note, {ω}_{2} is negative of convention\right)$ ${V}_{t} = {R}_{t} {ω}_{2} = {V}_{h} cos \left(θ+ψ\right)$

For a single step prediction, trailer speed in each direction is: ${V}_{t , x} \left(t\right) = cos \left(θ\right) {V}_{t}$ ${V}_{t , y} \left(t\right) = sin \left(θ\right) {V}_{t}$

The new locations of the tractor rear wheel, the trailer wheel and the hitch point can be updated using a fourth order Runge-Kutta method, for example. The new trailer angle, θ, can be estimated with these new locations at time t.
If *M* ≠ 0 (hitch point not directly over rear axle), the trailer angular velocity is: $\dot{θ} = - {ω}_{1} - {ω}_{2}$ (where directions are reverse of Figs. 5 and 6)$\dot{θ} = {V}_{f} \frac{sin \left(α\right)}{{L}_{1}} \left(-1-\frac{M}{sin \left(ψ\right)}∗\frac{sin \left(θ+ψ\right)}{{L}_{2}}\right) , where ψ = atan \left(M\frac{tan \left(α\right)}{{L}_{1}}\right)$ If M = 0 (hitch point directly over rear axle), the trailer angular velocity is: $\dot{θ} = {V}_{f} \frac{sin \left(α\right)}{{L}_{1}} \left(-1-\frac{{L}_{1}}{tan \left(α\right)}∗\frac{sin \left(θ\right)}{{L}_{2}}\right)$

Future trailer angle (θ₁, θ₂,...θₖ) and trailer angle velocity can be determined iteratively over time (tₙ, tₙ₊₁, tₙ₊₂, tₙ₊₃...) using the above equations (see, Fig. 4, block 204). If the trailer angle is sufficiently high (above a jackknife warning threshold, i.e., θ_{κ} > θ_{danger}; Fig. 4, block 206), then a jackknife condition can occur where the trailer 14 contacts the tractor 12, potentially causing damage and requiring expensive and/or time consuming repairs. But, it is not enough to provide a warning of an impending jackknife, as the operator cannot determine the urgency particularly if intentionally articulating the trailer at an extreme angle to maneuver in a tight space.

To this end, the distance to danger (d_{danger}) is determined (block 208) if the trailer angle exceeds the jackknife warning threshold, that is, the trailer angle at which a collision between the tractor 12 and trailer 14 is imminent ("Yes" at block 206). In one example, the jackknife warning threshold, θ_{danger}, is 75°, but it should be understood that other trailer angle thresholds may be used. Additional criteria may be used to display a jackknife warning, such as a time horizon. That is, if the jackknife warning threshold has been exceeded, but the vehicle is moving very slowly then a warning may not provided until the time to collision is below a time threshold, for example, within a few seconds. A higher time threshold may be provided when the vehicle is moving at a greater speed to give the operator more reaction time. This additional time-based threshold recognizes that an operator may be moving the vehicle very slowly to avoid jackknifing while maneuvering in a tight space. Below the jackknife warning threshold, no warning or other communication need be provided to the operator (block 212).

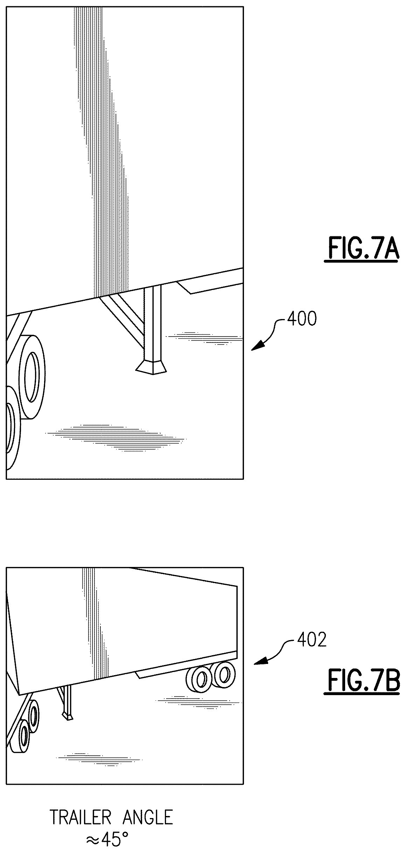

Figures 7A and 7B illustrate a simultaneous Class II view 400 (Fig. 7A) and a Class IV view 402 (Fig. 7B) with the trailer 14 at a trailer angle of approximately 45 degrees, relative to the tractor 12. Since the trailer angle is below the jackknife warning threshold, θ_{danger}, no warning is provided.

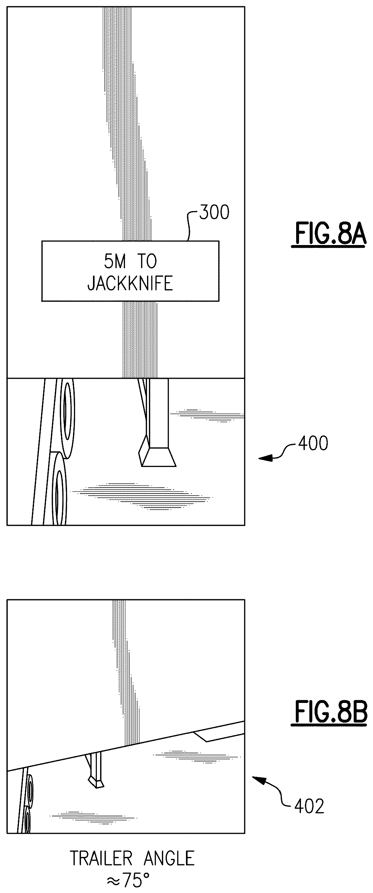

Figures 8A and 8B illustrate a simultaneous Class II view 400 (Fig. 8A) and a Class IV view 402 (Fig. 8B) at a trailer angle of approximately 75° degrees. Since the trailer angle is above the jackknife warning threshold, θ_{danger}, a warning 300 including the distance to danger d_{danger}, is displayed (Fig. 4, block 210), here, on the same display as the Class II view 400 (e.g., display 18A and/or 18B). However, the warning 300 may be illustrated in different displays or all the displays, if desired.

The warning 300 is a distance of travel of the vehicle 10 along its current trajectory (rather than the distance between the tractor 12 and trailer 14 before collision). Displaying the distance of travel gives the operator more actionable information with which to make a decision. For example, if the operator knows only 3 meters more of forward travel is needed before making a steering correction, then knowing that there are 5 meters of travel left before a jackknife (Fig. 8A) gives the operator the assurance that a jackknife will not occur although a warning is being provided.

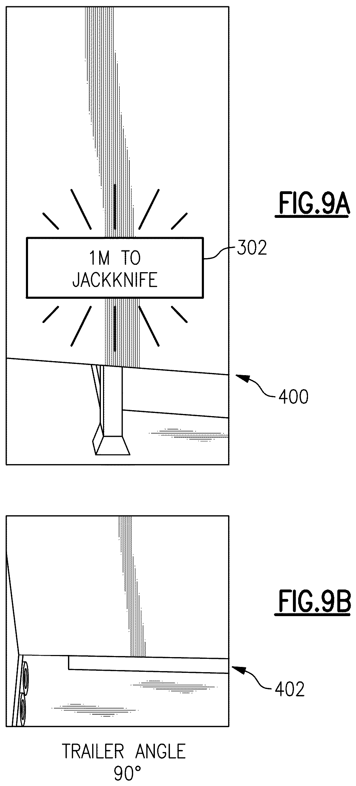

Figures 9A and 9B illustrate a simultaneous Class II view 400 (Fig. 9A) and a Class IV view (Fig. 9B) when the trailer 14 is at a 90 degree angle. In this example, at this angle the trailer angle is at a maximum and the distance to danger, d_{danger}, being even less, and cannot be further angled without damaging either the tractor 12 , the trailer 14, or both. The warning 302 may be intensified while displaying the distance of vehicle travel before jackknife, for example, by a change in color of the depicted distance, a flashing of the depicted distance, and/or an audible warning.

While described above in relation to a commercial tractor pulling a trailer, it is appreciated that the wide turn requirement is present in any similar vehicle. As such, the features, systems and apparatuses of the invention described herein are applicable to any similar vehicle configurations and are not limited to commercial tractor trailer configurations.

Although an example embodiment has been disclosed, a worker of ordinary skill in this art would recognize that certain modifications would come within the scope of the claims. For that reason, the following claims should be studied to determine their true scope and content.

## Claims

1. A camera monitor system (CMS) for a vehicle comprising:
a camera mounted to a tractor and configured to record images that depict a trailer having a wheelbase, the trailer attached to the tractor;
an electronic display configured to display the images; and
a CMS controller operatively connected to the camera and electronic display, the CMS controller configured to perform image processing on the images to extract at least the wheelbase, the CMS controller configured to:
determine whether a trailer angle of the trailer exceeds a jackknife warning threshold based on a depiction of the trailer in the images; and
depict a distance to a jackknife event if the jackknife warning threshold is exceeded.

2. The CMS of claim 1, wherein the CMS controller is configured to determine that the trailer angle of the trailer exceeds the jackknife warning threshold based on a calculated trailer angle based upon a steering angle, a tractor length from rotational axes of front and rear tractor wheels, the wheelbase, a trailer axle to trailer end distance, and a distance of rear tractor wheel to hitch point.

3. The CMS of claim 1 or 2, wherein the CMS controller is configured to determine that the trailer angle exceeds the jackknife warning threshold based upon the vehicle velocity.

4. The CMS of any preceding claim, wherein the CMS controller is configured to calculate a trailer angular velocity to determine the distance to the jackknife event.

5. The CMS of any preceding claim, wherein the images depict at least one of a Class II view and a Class IV view, and the depicted distances is overlayed onto the at least one of a Class **II** view and a Class IV view.

6. The CMS of any preceding claim, wherein the warning includes an indication of a severity of a risk of a jackknife condition occurring, wherein the indication includes at least one of a change in color of the depicted distance, a flashing of the depicted distance, and an audible warning.

7. A method for providing an alert for an impending jackknife between a vehicle and a trailer, comprising:
using a camera mounted to a tractor to record images that depict a trailer having a wheelbase, the trailer attached to the tractor;
extracting the wheelbase from the images by image processing;
displaying the images on an electronic display;
determining whether a trailer angle of the trailer exceeds a jackknife warning threshold based on a depiction of the trailer in the images; and
depict a distance to a jackknife event if the jackknife warning threshold is exceeded.

8. The method of claim 7, wherein the determining step includes determining whether the trailer angle of the trailer exceeds the jackknife warning threshold based on a calculated trailer angle based upon a steering angle, a tractor length from rotational axes of front and rear tractor wheels, the wheelbase, a trailer axle to trailer end distance, and a distance of rear tractor wheel to hitch point.

9. The method of claim 7 or 8, wherein the determining step includes determining whether the trailer angle exceeds the jackknife warning threshold based upon the vehicle velocity.

10. The method of any one of claims 7 to 9, wherein the determining step includes calculating a trailer angular velocity to determine the distance to the jackknife event.

11. The method of any one of claims 7 to 10, wherein the images depict at least one of a Class **II** view and a Class IV view, and the depicted distances is overlayed onto the at least one of a Class **II** view and a Class IV view.

12. The method of any one of claims 7 to 11, wherein the warning includes an indication of a severity of a risk of a jackknife condition occurring, wherein the indication includes at least one of a change in color of the depicted distance, a flashing of the depicted distance, and an audible warning.

13. The CMS of any one of claims 1 to 6, or the method of any one of claims 7 to 12, wherein the distance to the jackknife event is a distance of vehicle travel along a current vehicle trajectory.

14. The CMS of any one of claims 1 to 6 or 13, or the method of any one of claims 7 to 13, wherein the jackknife warning threshold is time-based.

15. The CMS of any one of claims 1 to 6, 13 or 14, or the method of any one of claims 7 to 14, wherein the jackknife warning threshold corresponds to a particular trailer angle.
